(19) Europäisches Patentamt / European Patent Office / Office européen des brevets

(11) **EP 4 287 111 B1**

(12) **EUROPÄISCHE PATENTSCHRIFT**

(45) Veröffentlichungstag und Bekanntmachung des Hinweises auf die Patenterteilung:
**24.07.2024  Patentblatt 2024/30**

(21) Anmeldenummer: **23176067.9**

(22) Anmeldetag: **30.05.2023**

(51) Internationale Patentklassifikation (IPC):
**G06T 5/70** (2024.01)    **G06T 5/60** (2024.01)

(52) Gemeinsame Patentklassifikation (CPC):
**G06T 5/70; G06T 5/60;** G06T 2207/10048;
G06T 2207/20081; G06T 2207/20084

(54) **BILDVERARBEITUNGSVERFAHREN**

IMAGE PROCESSING METHOD

PROCÉDÉ DE TRAITEMENT D'IMAGES

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **31.05.2022  DE 102022113669**

(43) Veröffentlichungstag der Anmeldung:
**06.12.2023  Patentblatt 2023/49**

(73) Patentinhaber: **VECTED GMBH**
**90768 Fürth (DE)**

(72) Erfinder: **DE JONGE, Andreas**
**90404 Nürnberg (DE)**

(74) Vertreter: **Hoefer & Partner Patentanwälte mbB**
**Pilgersheimer Straße 20**
**81543 München (DE)**

(56) Entgegenhaltungen:
- **JUNTAO GUAN ET AL: "Fixed Pattern Noise Reduction for Infrared Images Based on Cascade Residual Attention CNN", ARXIV.ORG, CORNELL UNIVERSITY LIBRARY, 201 OLIN LIBRARY CORNELL UNIVERSITY ITHACA, NY 14853, 22 October 2019 (2019-10-22), XP081518993, DOI: 10.1016/J.NEUCOM.2019.10.054**
- **NUGENT PAUL W ET AL: "Radiometric calibration of infrared imagers using an internal shutter as an equivalent external blackbody", OPTICAL ENGINEERING, SOC. OF PHOTO-OPTICAL INSTRUMENTATION ENGINEERS, BELLINGHAM, vol. 53, no. 12, 1 December 2014 (2014-12-01), pages 123106, XP060048239, ISSN: 0091-3286, [retrieved on 20141209], DOI: 10.1117/1.OE.53.12.123106**

**Beschreibung**

Die Erfindung betrifft ein Bildverarbeitungsverfahren der im Oberbegriff des Anspruchs 1 genannten Art zur Verringerung einer durch ein Störbild repräsentierten, insbesondere betriebstemperaturabhängigen Bildstörung eines Wärmebildes einer Wärmebildkamera.

In einem von einem Sensor einer Wärmebildkamera gelieferten Rohbild (Rohdaten) ist einem Nutzbild, das die von der Wärmebildkamera erfasste Szenerie wiedergibt, ein Störbild überlagert. Die Rohdaten weisen eine intrinsische Unstimmigkeit auf, die das Nutzbild verfälscht und die Bildqualität der Wärmebildkamera verschlechtert.

In GUAN ET AL: "Fixed Pattern Noise Reduction for Infrared Images Based on Cascade Residual Attention CNN", ARXIV.ORG, 2019, XP081518993, DOI: 10.1016/J.NEUCOM.2019.10.054, wird ein Kaskaden-CNN-Modell vorgeschlagen, das die Kalibrierungsparameter direkt aus den Trainingsdaten lernt, anstatt sich auf vordefinierte Prioritäten oder Filter zu stützen.

Durch US 10 929 955 B2 und Guan et al. ist ein Bildverarbeitungsverfahren der im Oberbegriff des Anspruchs 1 genannten Art bekannt.

Der Erfindung liegt die Aufgabe zugrunde, ein Bildverarbeitungsverfahren in der im Oberbegriff des Anspruchs 1 genannten Art anzugeben, das gegenüber dem bekannten Verfahren verbessert ist.

Diese Aufgabe wird durch die im Anspruch 1 angegebene Erfindung gelöst.

Die Erfindung löst sich von dem Ansatz, mithilfe eines künstlichen neuronalen Netzwerkes Merkmale des Nutzbildes aus den verarbeiteten Daten zu extrahieren und Merkmale des Störbildes zu eliminieren oder zumindest zu minimieren. Er liegt vielmehr der Gedanke zugrunde, Merkmale des Störbildes aus den verarbeiteten Bilddaten zu extrahieren und Merkmale des Nutzbildes zu minimieren oder im Idealfall aus den verarbeiteten Daten zu eliminieren bzw. herauszurechnen, sodass dementsprechend erfindungsgemäß der Output Layer des künstlichen neuronalen Netzwerkes das Störbild bzw. wenigstens ein Störbildanteil ausgibt. Aus dem so ermittelten Störbild und dem Rohbild, das in das Netzwerk eingespeist worden ist, kann dann das störungsreduzierte Nutzbild ermittelt werden.

Während bei dem aus dem Stand der Technik bekannten Verfahren ein Ausfall des zur Korrektur herangezogenen Bildverarbeitungsverfahrens zu einem vollständigen Bildausfall führt, liefert eine Wärmebildkamera, deren Wärmebild mittels des erfindungsgemäßen Bildbearbeitungsverfahrens bearbeitet und korrigiert wird, auch bei einem Ausfall der Korrektur ein Bild, das dann unkorrigiert ist. Dementsprechend sind erfindungsgemäß Bildausfälle, die durch einen Ausfall der Korrektur des Wärmebildes verursacht werden, vermieden.

Das aus dem Stand der Technik bekannte Verfahren beruht auf der in der Praxis nicht zutreffenden Annahme, dass sich der nichtlineare Störbildanteil bei einer Veränderung der Betriebstemperatur der Wärmebildkamera nicht verändert. Demgegenüber werden erfindungsgemäß sowohl der lineare Störbildanteil und als auch der nichtlineare Störbildanteil durch das künstliche neuronale Netzwerk ermittelt, sodass beide Störbildanteile qualitativ und quantitativ erfasst und bei der Ermittlung des Störbildes berücksichtigt werden können. Auf diese Weise ist die Bildkorrektur verbessert.

Ein weiterer Vorteil des erfindungsgemäßen Bildverarbeitungsverfahrens, das nachfolgend auch kurz als Verfahren bezeichnet wird, besteht darin, dass eine Aktivität des Verfahrens aufgrund der Verwendung eines nichtrekurrenten künstlichen neuronalen Netzwerkes zeitlich auf einen automatisch oder von einem Benutzer der Wärmebildkamera ausgelösten Kalibrierungsprozess beschränkt ist, während das aus dem Stand der Technik bekannte Bildverarbeitungsverfahren während des Betriebs der Wärmebildkamera im Hintergrund permanent "mitläuft".

Vorteilhafte und zweckmäßige Weiterbildungen sind in den auf den Anspruch 1 rückbezogenen Unteransprüchen angegeben.

Erfindungsgemäß kann das künstliche neuronale Netzwerk beispielsweise unter Verwendung der Open-Source Bibliothek für maschinelles Lernen und neuronale Netzwerke "TensorFlow" implementiert werden.

Dabei kann das Training des künstlichen neuronalen Netzwerks beispielsweise unter Verwendung der in TensorFlow bereitgestellten ADAM (Adaptive Moment Estimation)-Optimierungsroutine durchgeführt werden. Das Training kann beispielsweise in folgenden Schritten erfolgen:

1. Die Bilddaten werden in eine geeignete Form gebracht, um sie für das maschinelle Lernen zu verwenden.

2. Die Modellarchitektur und Struktur des neuronalen Netzwerks in TensorFlow, einschließlich der Anzahl und Art der Schichten, Aktivierungsfunktionen, Verlustfunktion und der Ausgabeschicht werden definiert.

3. Auswahl der ADAM-Optimierungsfunktion und Festlegung der Lernrate, die die Größe der Schritte definiert, die während des Trainings zur Aktualisierung der Gewichte und Bias-Werte unternommen werden.

4. Definition einer geeigneten Verlustfunktion, um die Diskrepanz zwischen den vorhergesagten Ausgaben des Modells und den tatsächlichen Labels zu quantifizieren.

5. Durchlaufen der Trainingsschleife. Die Bilddaten werden in Batches geladen, durch das Modell geleitet, der Verlust berechnet und die Gewichte und Bias-Werte aktualisiert. Dieser Prozess wird iterativ für mehrere Epochen (Durchläufe) wiederholt, um das Modell allmählich zu verbessern.

6. Rückpropagation und Gradientenaktualisierung.

Die ADAM-Optimierungsroutine verwendet die Methode der automatischen Differentiation, um die Gradienten der Verlustfunktion bezüglich der Gewichte und Bias-Werte zu berechnen. Diese Gradienten werden dann verwendet, um die Gewichte und Bias-Werte zu aktualisieren und das Modell anzupassen. 7. Evaluation und Anpassung: Nach jedem Durchlauf (Epoche) werden typischerweise separate Validierungsdaten verwendet, um das Modell zu evaluieren und Hyperparameter anzupassen, falls erforderlich.

Im Anspruch 5 ist eine erfindungsgemäße Bildverarbeitungseinrichtung angegeben, die zur Durchführung eines erfindungsgemäßen Bildverarbeitungsverfahrens zur Verringerung einer durch ein Störbild repräsentierten Bildstörung eines Wärmebildes einer Wärmebildkamera ausgebildet und programmiert ist.

Im Anspruch 6 ist eine erfindungsgemäße Wärmebildkamera mit einer erfindungsgemäßen Bildverarbeitungseinrichtung angegeben.

Eine vorteilhafte Weiterbildung der erfindungsgemäßen Wärmebildkamera ist im Anspruch 7 angegeben.

Die Erfindung wird nachfolgend unter Bezugnahme auf die beigefügte, blockschaltbildartige Zeichnung anhand eines Ausführungsbeispiels näher erläutert.

Es zeigt:

Fig. 1    ein Flussdiagramm zur Verdeutlichung der Netzwerkarchitektur eines künstlichen neuronalen Netzwerkes, das bei einem Ausführungsbeispiel eines erfindungsgemäßen Verfahrens verwendet wird,

Fig. 2    einen Teil der Netzwerkarchitektur aus Fig. 1 im Bereich eines Gainblocks,

Fig. 3    einen Teil der Netzwerkarchitektur aus Fig. 1 im Bereich eines Kompressionsblocks und eines Rekonstruktionsblocks,

Fig. 4    einen Teil der Netzwerkarchitektur aus Fig. 1 im Bereich eines Outputs des Netzwerks gemäß Fig. 1 und

Fig. 5    Beispiele eines unkorrigierten Wärmebildes, eines unter Verwendung des erfindungsgemäßen Bildverarbeitungsverfahrens korrigierten Wärmebildes und eines Differenzbildes zwischen dem korrigierten Wärmebild und dem unkorrigierten Wärmebild.

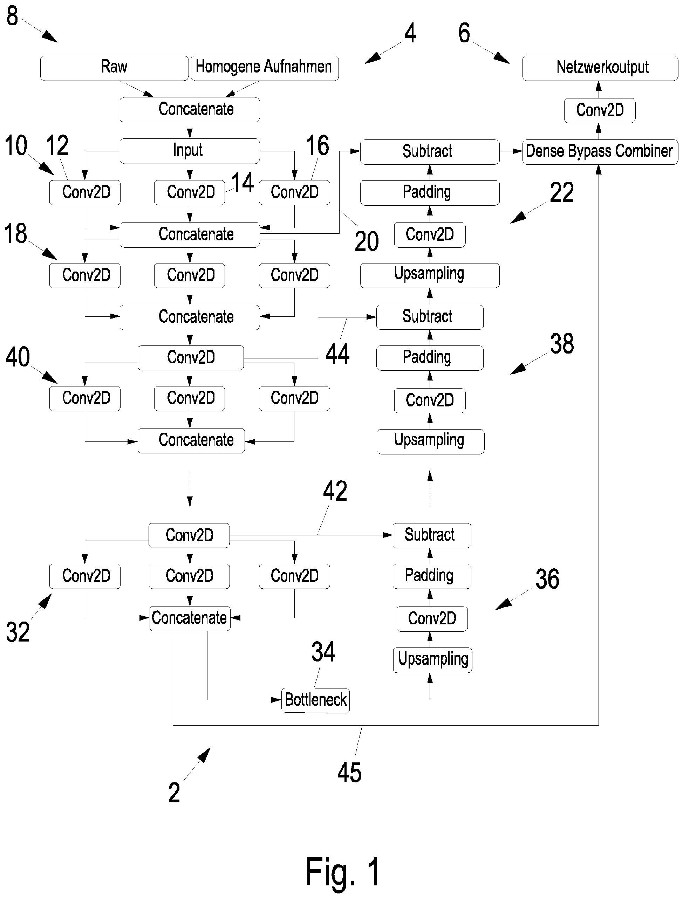

Nachfolgend wird unter Bezugnahme auf Fig. 1 bis Fig. 5 ein Ausführungsbeispiel eines erfindungsgemäßen Bildbearbeitungsverfahrens, das nachfolgend auch kurz als Verfahren bezeichnet wird, zur Verringerung einer durch ein Störbild repräsentierten, betriebstemperaturabhängigen Bildstörung eines Wärmebildes einer Wärmebildkamera näher erläutert.

In Fig. 1 ist die Netzwerkarchitektur eines bei dem erfindungsgemäßen Verfahren verwendeten künstlichen neuronalen Netzwerks 2 dargestellt.

Das erfindungsgemäße Bildverarbeitungsverfahren beruht auf einem als Faltungsnetzwerk ausgebildeten künstlichen neuronalen Netzwerk 2 mit einem Input Layer 4 und einem Output Layer 6 (vgl. Fig. 1). Der grundsätzliche Aufbau und die grundsätzliche Funktionsweise eines entsprechenden künstlichen neuronalen Netzwerks sind dem Fachmann allgemein bekannt und werden daher hier nur insoweit näher erläutert, wie dies für die Erläuterung der Erfindung relevant ist. Das gleiche gilt für Aufbau und Funktionsweise von Faltungsnetzwerken zur Bildverarbeitung.

Das nachstehend näher beschriebene, erfindungsgemäß verwendete künstliche neuronale Netzwerk kann beispielsweise unter Verwendung der Open-Source Bibliothek "TensorFlow" implementiert werden.

Erfindungsgemäß ist das künstliche neuronale Netzwerk, das nachfolgend auch kurz als Netzwerk bezeichnet wird, als nicht-rekurrentes Feedforward-Netzwerk programmiert.

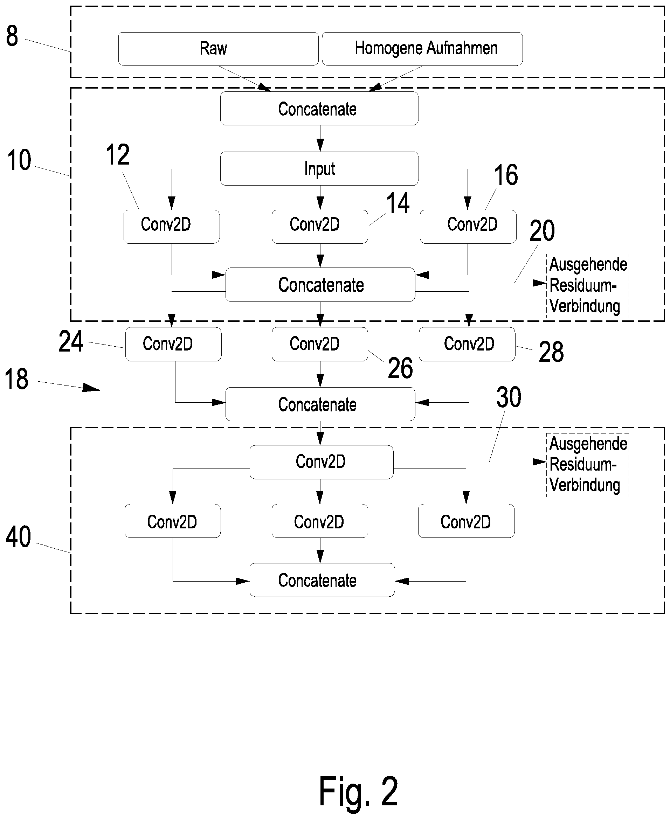

Fig. 2 zeigt einen Eingangsblock 8 des Netzwerks 2. In den Eingangsblock 8 wird in einem ersten Kanal ein Wärmebild einer Wärmebildkamera eingespeist, und zwar in Form eines Rohbildes, das aus den durch den Sensor eine Wärmebildkamera ausgegebenen Rohdaten besteht. In einem zweiten Kanal wird ein Referenzbild hinzugefügt, das durch Aufnahme eines homogenen schwarzen Strahlers gewonnen wird. Das Referenzbild kann beispielsweise dadurch gewonnen werden, dass bei geschlossenem Verschluss der Wärmebildkamera ein Rohbild aufgenommen wird.

Das Netzwerk 2 ist so programmiert, dass sowohl der lineare Störbildanteil (Offset) als auch der nichtlineare Störbildanteil (Gain) ermittelt wird und dass in den verarbeiteten Bilddaten enthaltene Nutzbildanteile des Nutzbildes minimiert und idealerweise eliminiert und aus den Bilddaten Störbildanteile des Störbildes extrahiert werden, sodass der Output Layer 6 des Netzwerks das Störbild oder zumindest einen der Störbildanteile ausgibt.

In einem dem Eingangsblock 8 unmittelbar nachgeordneten Gainblock 10 (vgl. Fig. 2) wird der nichtlineare Störbildanteil (Gain) ermittelt. In dem Gainblock 10 werden Faltungsoperationen in Form gewöhnlicher zweidimensionaler Faltungen und zweidimensionaler tiefenweiser Faltungen ausgeführt, wobei die Bildgröße in dem Gainblock 10 nicht reduziert wird.

Wie insbesondere aus Fig. 2 ersichtlich ist, weist der Gainblock eine Kronleuchterstruktur auf, wobei jeder Ast 12, 14, 16 der Kronleuchterstruktur über einen anderen Faltungskern verfügt.

Vom Ausgang des Gainblocks 10 wird das Ergebnis in einen ersten Kompressionsblock 18 (vgl. Fig. 1 und Fig. 2) einer Mehrzahl von aufeinanderfolgenden Kompressionsblöcken weitergeleitet. Eine Kopie des Ergebnisses wird über eine ausgehende Residuum-Verbindung 20 zu einem korrespondierenden Rekonstruktionsblock (Upsampling-Block) 22 des Netzwerks 2 weitergeleitet (vgl. Fig. 1 und Fig. 2).

Der Kompressionsblock 18 und die weiteren Kompressionsblöcke weisen ähnlich wie der Gainblock 10 eine Kronleuchterstruktur auf, wobei Faltungsarten und -kerne bei dem dargestellten Ausführungsbeispiel mit denen des Gainblocks 10 identisch sind. Allerdings wird die Bildgröße beim Durchlauf durch einen Kompressionsblock 18 jeweils um die Hälfte reduziert und die verarbeiteten Bilddaten entsprechend komprimiert. Das Ergebnis der drei Faltungsäste eines Kompressionsblocks, beispielsweise der Faltungsäste 24, 26, 28 des Kompressionsblocks 18 (vgl. Fig. 2), wird zum nächsten Kompressionsblock weitergeleitet. Eine Kopie des Ergebnisses wird wiederum über eine ausgehende Residuum-Verbindung 30 zu einem korrespondierenden Rekonstruktionsblock des Netzwerks weitergeleitet (vgl. Fig. 2).

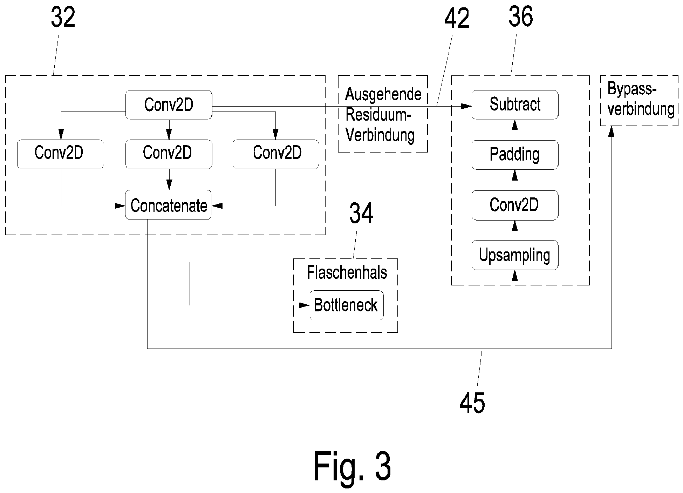

Nach dem Durchlaufen eines letzten Kompressionsblocks 32 wird der verbleibende lineare Störbildanteil konstruiert und die Bildgröße rekonstruiert (vgl. Fig. 3). Am Ausgang des letzten Kompressionsblocks 32 ist die Datenmenge der durch das Netzwerk verarbeiteten Bilddaten minimal. Die Datenmenge nimmt von dieser Stelle der Netzwerkarchitektur des Netzwerks an wieder zu, sodass diese Stelle für die Verarbeitung der Bilddaten einen Flaschenhals 34 bildet.

In den darauffolgenden Upsampling-Blöcken 36, 38 wird die Bildgröße schrittweise rekonstruiert, wobei die Upsampling-Blöcke 36, 38 die Größe der jeweiligen Eingangsmatrix verdoppeln, die Anzahl der Faltungsfilter mittels einer gewöhnlichen zweidimensionalen Faltung reduzieren und sie mittels Padding an die Größe des Ergebnisses des korrespondierenden Kompressionsblocks 32, 40 anpassen, das jeweils über eine eingehende Residuum-Verbindung 42 bzw. 44 in den jeweiligen Upsampling-Block 36 bzw. 38 eingespeist und vom Resultat des Upsampling-Blocks 36 bzw. 38 subtrahiert wird.

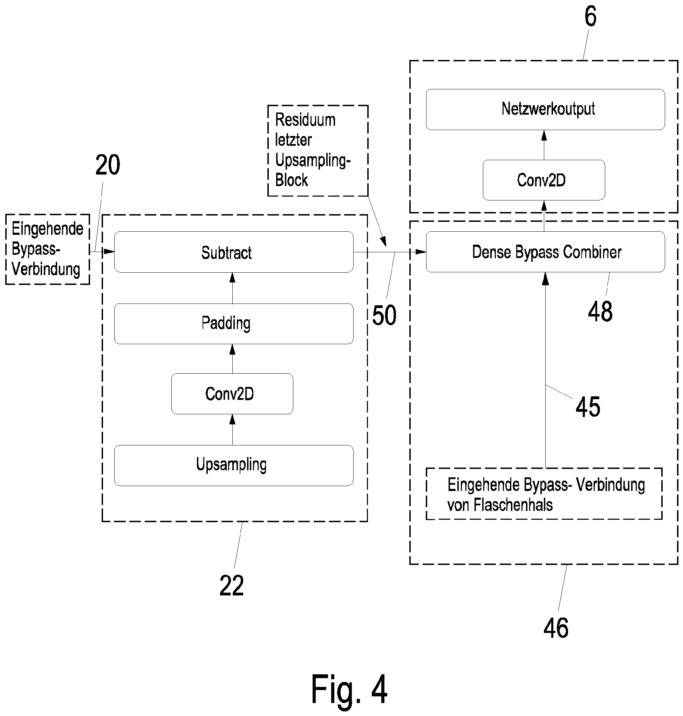

Nach dem Durchlaufen des letzten Upsampling-Blocks 22 und Subtraktion der letzten eingehenden Residuum-Verbindung 20 (vgl. Fig. 4) werden die verbleibenden Faltungsfilter zusammen mit den am Flaschenhals 34 kopierten Daten (vgl. Bezugszeichen 45 in Fig. 3) in ein Bypassmodul 46 mit einem Dense Bypass Combiner 48 geleitet. Die Daten aus der Bypassverbindung werden zunächst mittels zweidimensionalem Mittelwert-Pooling reduziert, vektorisiert und an eine Dense-Schicht weitergeleitet. Nach einer ReLU-Aktivierung und einer weiteren Dense-Schicht werden sie auf die Form der Daten aus dem letzten Upsampling-Block 22 gebracht und mit ihnen verknüpft. Die Daten aus dem letzten Upsampling-Block 22 werden über eine Residuum-Verbindung 50 in das Bypassmodul 46 eingespeist (vgl. Fig. 4).

Anschließende Faltungen dienen dazu, die Rekonstruktion aus den Dense-Schichten mit den Rekonstruktionen aus den Upsampling-Blöcken zu verbinden und die beabsichtigte Bildgröße herzustellen.

Am Ausgang liefert das Netzwerk 2 den linearen Störbildanteil (Offset), der vom Gain-korrigierten Rohbild subtrahiert wird und dadurch das Nutzbild liefert.

Wie am Eingang des Netzwerks ersichtlich, wird einerseits das Rohbild (eines aufgenommenen Objekts oder einer Szenerie) und andererseits die Aufnahme eines homogenen schwarzen Strahlers (vgl. "Homogene Aufnahmen" in Fig. 1) in das Netzwerk eingespeist. Bei beiden Aufnahmen handelt es sich um unkorrigierte Bilddateien, welche beide den linearen sowie den nichtlinearen Störanteil enthalten. Diese Aufnahmen werden verkettet, mit Faltungen gemäß der Darstellung des Gainblocks verarbeitet und letztendlich zum Ausgang des Gainblocks geleitet. Am Ausgang des Gainblocks wird zum einen wird das Ergebnis zum Rest des Netzwerks weitergeleitet. Zum anderen dieses Ergebnis mittels der eingezeichneten Residuumverbindung (vgl. Fig. 2) zum vorletzten Layer des Netzwerks geleitet. An dieser Stelle wird es vom Output des restlichen Netzwerks subtrahiert. Die Residuumverbindung erlaubt nun eine Rückpropagation des Fehlers, welcher dazu verwendet wird, den nichtlinearen Störanteil im Gainblock zu optimieren.

Wie oben beschrieben, wird das Netzwerk mittels der in TensorFlow integrierten ADAM-Optimierungsroutine trainiert. Als Verlustfunktion (Loss) dient dabei die Kombination aus Structure Similarty Index (SSIM) und dem relativen mittleren quadratischen Fehler (relative mean square error / relmse). Die zugehörige Formel lautet:

$$Loss = (1\text{-}SSIM) + relmse$$

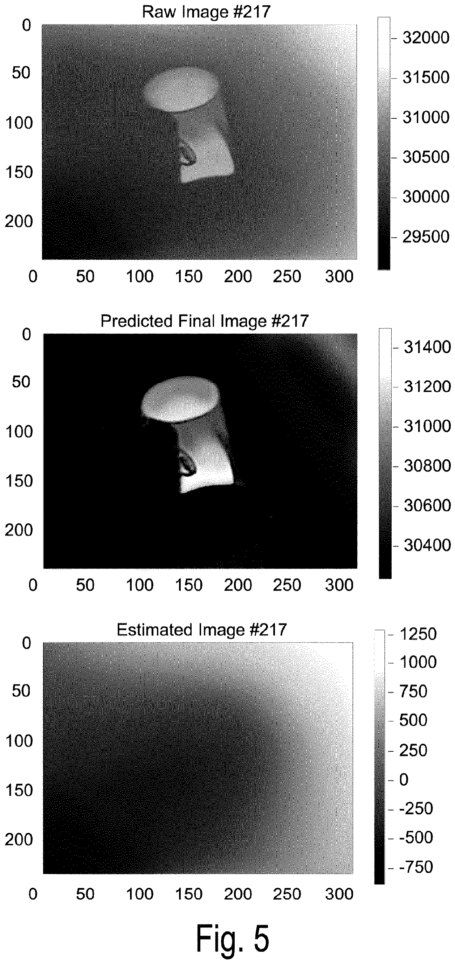

Fig. 5 zeigt links ein Rohbild, in der Mitte ein mittels des erfindungsgemäßen Bildverarbeitungsverfahrens korrigiertes Nutzbild und rechts ein Differenzbild zwischen dem Rohbild und dem Nutzbild.

Bezugszeichenliste

| 2 | Netzwerk |
|---|---|
| 4 | Input Layer |
| 6 | Output Layer |
| 8 | Eingangsblock |
| 10 | Gainblock |
| 12 | Ast der Kronleuchterstruktur |
| 14 | Ast der Kronleuchterstruktur |
| 16 | Ast der Kronleuchterstruktur |
| 18 | Kompressionsblock |
| 20 | Residuum-Verbindung |
| 22 | Rekonstruktionsblock |
| 24 | Faltungsast |
| 26 | Faltungsast |
| 28 | Faltungsast |
| 30 | Residuum-Verbindung |

32  letzter Kompressionsblock
34  Flaschenhals
36  Upsampling-Block
38  Upsampling-Block
40  Rekonstruktionsblock
42  Residuum-Verbindung
44  Residuum-Verbindung
46  Bypassmodul
48  Dense Bypass Combiner
50  Residuum-Verbindung

**Patentansprüche**

1. Bildverarbeitungsverfahren zur Verringerung einer durch ein Störbild repräsentierten, insbesondere betriebstemperaturabhängigen Bildstörung eines Wärmebildes einer Wärmebildkamera, wobei das Störbild einen linearen Störbildanteil (Offset) und einen nichtlinearen Störbildanteil (Gain) umfasst,

bei dem ein Rohbild der Wärmebildkamera in einen Input Layer eines künstlichen neuronalen Netzwerkes eingespeist wird, wobei in dem Rohbild das Störbild einem Nutzbild überlagert ist,
wobei das künstliche neuronale Netzwerk als Faltungsnetzwerk mit einem Input Layer und einem Output Layer programmiert ist,
wobei das künstliche neuronale Netzwerk als nicht-rekurrentes Feedforward-Netzwerk programmiert ist,
**dadurch gekennzeichnet,**
**dass** in den Input Layer des künstlichen neuronalen Netzwerkes ein mittels der Wärmebildkamera aufgenommenes Referenzbild eines homogenen schwarzen Strahlers eingespeist wird und
wobei das künstliche neuronale Netzwerk

- zur Minimierung von Nutzbildanteilen des Nutzbildes und
- zur Ermittlung des linearen Störbildanteiles und des nichtlinearen Störbildanteiles

bei der Verarbeitung der Bilddaten programmiert ist, derart, dass aus den verarbeiteten Bilddaten das Störbild extrahiert wird und der Output Layer das Störbild oder wenigstens einen Störbildanteil ausgibt.

2. Verfahren nach Anspruch 1, **dadurch gekennzeichnet, dass** das Netzwerk derart programmiert ist, dass in einem dem Input Layer unmittelbar nachgeordneten Gainblock der Hidden Layers des Netzwerkes der nichtlineare Störbildanteil ermittelt wird.

3. Verfahren nach Anspruch 2, **dadurch gekenn-** **zeichnet, dass** in den Hidden Layers dem Gainblock eine Mehrzahl von Kompressionsblöcken nachgeordnet ist.

4. Verfahren nach Anspruch 3, **dadurch gekennzeichnet, dass** in den Hidden Layers einem letzten Kompressionsblock zur Kompression der Bilddaten eine Mehrzahl von Rekonstruktionsblöcken nachgeordnet ist.

5. Bildverarbeitungseinrichtung, die zur Durchführung eines Bildverarbeitungsverfahrens nach einem der vorhergehenden Ansprüche zur Verringerung einer durch ein Störbild repräsentierten, insbesondere betriebstemperaturabhängigen Bildstörung eines Wärmebildes einer Wärmebildkamera ausgebildet und programmiert ist.

6. Wärmebildkamera mit einer Bildverarbeitungseinrichtung nach Anspruch 5.

7. Wärmebildkamera nach Anspruch 6, **dadurch gekennzeichnet, dass** die Wärmebildkamera zwischen einem Kalibrierungsmodus, in dem die Wärmebildkamera durch Ermittlung des Störbildes kalibriert wird, und einem Betriebsmodus umschaltbar ist, in dem Wärmebilder aufgenommen und unter Heranziehung des in dem Kalibrierungsmodus ermittelten Störbildes korrigiert ausgegeben werden.

**Claims**

1. Image processing method for reducing image interference in a thermal image from a thermal imaging camera, which interference is represented by an interference image and is in particular dependent on the operating temperature, wherein the interference image comprises a linear interference image portion (offset) and a non-linear interference image portion (gain),

in which a raw image from the thermal imaging camera is fed into an input layer of an artificial neural network, wherein the interference image is overlaid on a useful image in the raw image, wherein the artificial neural network is programmed as a convolutional network having an input layer and an output layer, wherein the artificial neural network is programmed as a non-recurrent feed-forward network,
**characterized in that**
a reference image of a homogeneous blackbody radiator, captured by means of the thermal imaging camera, is fed into the input layer of the artificial neural network, and wherein the artificial neural network is programmed to

- minimize useful image portions of the useful image and
- ascertain the linear interference image portion and the non-linear interference image portion

during processing of the image data, such that the interference image is extracted from the processed image data and the output layer outputs the interference image or at least one interference image portion.

2. Method according to claim 1, **characterized in that** the network is programmed such that the non-linear interference image portion is ascertained in a gain block, immediately following the input layer, of the hidden layers of the network.

3. Method according to claim 2, **characterized in that** a plurality of compression blocks follow the gain block in the hidden layers.

4. Method according to claim 3, **characterized in that** a plurality of reconstruction blocks follow the last compression block for compressing the image data in the hidden layers.

5. Image processing device which is configured and programmed to carry out an image processing method according to any one of the preceding claims for reducing image interference in a thermal image from a thermal imaging camera, which interference is represented by an interference image and is in particular dependent on the operating temperature.

6. Thermal imaging camera, comprising an image processing device according to claim 5.

7. Thermal imaging camera according to claim 6, **characterized in that** the thermal imaging camera can be switched between a calibration mode, in which the thermal imaging camera is calibrated by ascertaining the interference image, and an operating mode, in which thermal images are captured and are output in a corrected manner by considering the interference image ascertained in the calibration mode.

**Revendications**

1. Procédé de traitement d'images destiné à réduire une perturbation d'image, liée en particulier à la température de fonctionnement, représentée par une image parasite, d'une image thermique d'une caméra thermique, dans lequel l'image parasite comprend une composante d'image parasite linéaire (décalage) et une composante d'image parasite non linéaire (gain),

où une image brute de la caméra thermique est injectée dans une couche d'entrée d'un réseau neuronal artificiel, dans lequel l'image parasite est superposée à une image utile dans l'image brute,

dans lequel le réseau neuronal artificiel est programmé en tant que réseau convolutif avec une couche d'entrée et une couche de sortie,

dans lequel

le réseau neuronal artificiel est programmé en tant que réseau feedforward [à propagation avant],

**caractérisé en ce**

**qu'**une image de référence, enregistrée au moyen de la caméra thermique, d'un émetteur noir homogène est injectée dans la couche d'entrée du réseau neuronal artificiel, et

dans lequel le réseau neuronal artificiel est programmé

- pour minimiser des composants d'image utile de l'image utile et
- pour déterminer la composante d'image parasite linéaire et la composante d'image parasite non linéaire

lors du traitement des données d'image de telle manière que l'image parasite est extraite à partir des données d'image traitées et la couche de sortie délivre l'image parasite ou au moins une composante d'image parasite.

2. Procédé selon la revendication 1, **caractérisé en ce que** le réseau est programmé de telle manière que la composante d'image parasite non linéaire est déterminée dans un bloc de gain, disposé directement en aval de la couche d'entrée, des couches cachées du réseau.

3. Procédé selon la revendication 2, **caractérisé en ce qu'**une multitude de blocs de compression est disposée en aval du bloc de gain dans les couches cachées.

4. Procédé selon la revendication 3, **caractérisé en ce qu'**une multitude de blocs de reconstruction est disposée en aval d'un dernier bloc de compression destinée à la compression des données d'image dans les couches cachées.

5. Dispositif de traitement d'images, qui est réalisé et programmé pour mettre en oeuvre un procédé de traitement d'images selon l'une quelconque des revendications précédentes destiné à réduire une perturbation d'image, liée en particulier à la température de fonctionnement, représentée par une image parasite, d'une image thermique d'une caméra thermique.

6. Caméra thermique avec un dispositif de traitement d'images selon la revendication 5.

7. Caméra thermique selon la revendication 6, **caractérisée en ce que** la caméra thermique peut être commutée entre un mode d'étalonnage, dans lequel la caméra thermique est étalonnée en déterminant l'image parasite, et un mode de fonctionnement, dans lequel des images thermiques sont enregistrées et sont délivrées de manière corrigée en tenant compte de l'image parasite déterminée dans le mode d'étalonnage.

Fig. 1

8

Raw | Homogene Aufnahmen

Concatenate

10

12

Input

16

Conv2D | Conv2D | Conv2D

14

20

Concatenate

Ausgehende
Residuum-
Verbindung

24 Conv2D | Conv2D | Conv2D 28

18

26

Concatenate

40

30

Conv2D

Ausgehende
Residuum-
Verbindung

Conv2D | Conv2D | Conv2D

Concatenate

Fig. 2

Fig. 3

6

Residuum
letzter
Upsampling-
Block

20

Netzwerkoutput

Conv2D

Eingehende
Bypass-
Verbindung

Subtract

Dense Bypass Combiner

48

Padding

50

Conv2D

45

Upsampling

Eingehende Bypass- Verbindung
von Flaschenhals

22

46

Fig. 4

Fig. 5

**IN DER BESCHREIBUNG AUFGEFÜHRTE DOKUMENTE**

**In der Beschreibung aufgeführte Patentdokumente**

- US 10929955 B2

**In der Beschreibung aufgeführte Nicht-Patentliteratur**

- **GUAN et al.** Fixed Pattern Noise Reduction for Infrared Images Based on Cascade Residual Attention CNN. *ARXIV.ORG,* 2019